# EUROPÄISCHE PATENTANMELDUNG

(11) **EP 3 978 664 A1**
(43) Veröffentlichungstag der Anmeldung: **06.04.2022**
(21) Anmeldenummer: 20199586.7
(22) Anmeldetag: 01.10.2020
(51) Int. Cl.: D03D 1/00, D03D 11/02, D03D 13/00, D03D 15/283, D03D 15/587, D03D 15/43, A41D 13/11

(54) **MASKE ZUR NASE UND MUND BEDECKUNG**

(71) Anmelder: UTT Technische Textilien GmbH & Co. KG, 86381 Krumbach (DE)
(72) Erfinder: HERZ, Karl-Heinz, 86381 Krumbach (DE); KOEHNEN, Ralf, 86381 Krumbach (DE)
(74) Vertreter: CPW GmbH

(57) **Zusammenfassung**

Die Erfindung betrifft eine Maske zur Bedeckung von mindestens der Nase und den Mund des Maskenträgers. Die Maske hat mindestens eine erste und eine zweite Lage, wobei die erste und die zweite Lage bei der Herstellung der Maske gleichzeitig gewebt worden sind und die Schussfäden einer der Lagen die Schussfäden der anderen Lagen an bestimmten Punkten kreuzen oder mit diesen verwoben sind, wobei durch die Kreuzung oder Verwebung Nähte während des Webens erzeugt worden sind. Die erste und die zweite Lage weisen eine Gewebedurchlässigkeit auf, die um mindestens 20% zueinander verschieden sind.

Ein weiterer Gegenstand der Erfindung ist ein Verfahren zur Herstellung einer solchen Maske.

## Beschreibung

Die Erfindung betrifft eine Maske, vorzugsweise eine Schutzmaske, die mindestens die Nase und den Mund des Trägers bedeckt und mindestens zwei Lagen aufweisen soll.

Solche Schutzmasken sind allgemein bekannt und werden insbesondere im medizintechnischen Bereich eingesetzt, um den Träger und/oder den Gegenüber vor Viren und Bakterien zu schützen, die beispielsweise durch Tröpfchen oder auch mittels Aerosole über die Nase oder den Mund verbreitet oder aufgenommen werden können.

Nachteilig bei den bisher bekannten Masken, ist die aufwändige Herstellung, sofern die Maske mehr als eine Lage aufweisen soll. Zumeist werden die Lagen separat hergestellt und anschließend in einem weiteren Prozessschritt (Konfektionierung) miteinander verbunden. Andererseits gibt es Masken, die zwar in einem Stück gefertigt wurden und mehr als eine Lage aufweisen, die Lagen aus diesem Grund aber in ihrer Wirkung identisch sind.

Es war daher die Aufgabe der vorliegenden Erfindung, eine Maske bereitzustellen, die zumindest zweilagig ist, allerdings ohne die Nachteile von mehrlagigen Masken bei der Herstellung oder bei der späteren Nutzung.

Gelöst wird die Aufgabe durch eine Maske gemäß Anspruch 1.

Die Maske gemäß der vorliegenden Erfindung bedeckt mindestens die Nase und den Mundbereich des Trägers und weist mindestens zwei Lagen auf. Eine erste und eine zweite Lage der Maske werden bei der Herstellung der Maske gleichzeitig gewebt, wobei die Schussfäden einer der Lagen die Schussfäden der anderen Lagen an bestimmten Punkten kreuzen oder mit diesen verwoben sind, wobei durch die Kreuzung oder Verwebung Nähte während des Webens erzeugt werden. Beide Lagen weisen eine Gewebedurchlässigkeit auf, die nach DIN EN ISO 9237 (Bestimmung der Luftdurchlässigkeit von textilen Flächengebilden) bestimmt wird. Die Gewebedurchlässigkeit der ersten Lage ist um 20% verschieden zu der Gewebedurchlässigkeit der zweiten Lage.

Eines der wichtigsten Komfortmerkmale bei Atemschutzmasken ist der Atemwiderstand, also der Widerstand, den der Träger beim Ein- und Ausatmen spürt - und der ihn dabei belastet. Durch die Ausgestaltung einer der Lagen mit einer höheren Gewebedurchlässigkeit kann vorteilhafterweise der Atemwiderstand dieser Lage verringert werden. Andererseits ist einer der Hauptaufgaben einer Maske die Filterung der Atemluft.

In einer Ausführungsform ist die Gewebedurchlässigkeit der ersten Lage gegenüber der Gewebedurchlässigkeit der zweiten Lage um 10%, um 30%, um 40% oder um 50% verschieden.

Es sollte klar sein, dass die Gewebedurchlässigkeit der Filterleistung der Maske entspricht, sofern die Maske keinen zusätzlichen Filter aufweist. Eine hohe Gewebedurchlässigkeit führt zu einer Lage mit einem geringen Luftwiderstand und einer geringen Filterleistung. Eine niedrige Gewebedurchlässigkeit führt zu einer Lage mit einem hohen Luftwiderstand und einer hohen Filterleistung. Die Gewebedurchlässigkeit der ersten Lage kann gegenüber der Gewebedurchlässigkeit der zweiten Lage um 20% höher oder niedriger sein.

Die Maske gemäß Anspruch 1 wird unter Verwendung einer Ein-Stück-Webtechnik hergestellt. Die Ein-Stück-Webtechnik (oder auch One-Piece Woven genannt) ist für die Herstellung von Airbags bekannt. Beschrieben wird ein solches Verfahren beispielsweise in der Schrift DE 603 06 000 T2.

Auch bereits bekannt ist die Verwendung dieser Webtechnik zur Herstellung einer Schutzmaske. In einer Pressemitteilung von der Lindauer Dornier GmbH (https://www.lindauerdornier.com/de/unternehmen/news/corona) wird mitgeteilt, dass Schutzmasken als One Piece Woven hergestellt und sich anschließend in eine gewünschten Form lasern lassen.

Bisher aber weder bekannt noch erwähnt ist eine Maske, die mittels Ein-Stück-Webtechnik hergestellt wird, deren Filterleistung aber in den unterschiedlichen Lagen verschieden ist. In vorteilhafter Weise wird hierdurch eine unkomplizierte aber sehr präzise Herstellung der Maske gewährleistet, die Maske bleibt jedoch für unterschiedliche Anwendungszwecke anpassbar. Beispielsweise kann die Maske so getragen werden, dass die erste Lage mit einer höheren Gewebedurchlässigkeit und somit einer niedrigeren Filterleistung dem Gesicht des Trägers zugewandten ist. In einem solchen Fall sorgt die zweite Lage mit der niedrigeren Gewebedurchlässigkeit und der damit verbundenen höheren Filterleistung für eine bessere Filterung von Tröpfchen oder Aerosolen aus der Luft zum Schutz des Maskennutzers, wobei aber das Ausatmen durch die erste Lage mit höherer Gewebedurchlässigkeit erleichtert ist. Insbesondere für Personen, die bei der Pflege von Patienten körperliche Arbeit verrichten, erleichtern Masken mit einem besseren Einatmungsverhalten das Arbeiten erheblich. Andererseits kann die Maske jedoch auch so angewendet werden, dass die Lage mit der geringen Gewebedurchlässigkeit (und somit der hohen Filterleistung) dem Träger zugewandt ist. Eine solche Trageposition kann beispielsweise von Trägern gewählt werden, die bereits Infektiös sind und ihre Mitmenschen nicht anstecken wollen. Die erfindungsgemäße Maske ist folglich besonders flexibel für unterschiedliche Situationen einsetzbar und trotzdem präzise und einfach in der Herstellung.

Es soll klar sein, dass die Gewebedurchlässigkeit durch verschiedene Parameter einstellbar ist. Die Parameter zur Einstellung der Gewebedurchlässigkeit sind beispielsweise die Garnfeinheit des Garns aus denen die Lagen hergestellt sind, die Anzahl der Einzelfilamente der in der ersten und/oder zweiten Lage verwendeten Garne, die Art der Verwebung, also beispielsweise der gewählte Bindungstyp oder die Anzahl der Kett- und Schussfäden innerhalb der Verwebung der Lagen, die Art der Fasern der Lagen oder eine Kombination der genannten Möglichkeiten.

In einer Ausführungsform der vorliegenden Erfindung weist die erste Lage zur Einstellung der Gewebedurchlässigkeit ein anderes Filamentgarn auf, als die zweite Lage. In einer Ausführungsform besteht der Unterschied zwischen den Filamentgarnen der ersten und der zweiten Lage in der Garnfeinheit der Filamentgarne. Beispielsweise kann eine Lage ein Filamentgarn mit einer Garnfeinheit von 50-500 dtex, vorzugsweise von 100 bis 250 dtex, noch bevorzugter von 150 bis 200 dtex aufweisen und die andere Lage ein Filamentgarn mit einer Garnfeinheit von 500 bis 1000 dtex, vorzugsweise von 550 bis 800 dtex, bevorzugter von 600 bis 750 dtex. In einem Ausführungsbeispiel weist die erste Lage als Schussgarn ein Garn mit einer Feinheit von über 800 dtex auf und als Kettgarn ein Garn mit einer Feinheit von unter 800 dtex und/oder die zweite Lage weist als Schussgarn ein Garn mit einer Feinheit im Bereich von 800 dtex bis 500 dtex auf und als Kettgarn ein Garn mit einer Feinheit im Bereich von 50 dtex bis 250 dtex.

In einer anderen Ausführungsform weisen die erste Lage und die zweite Lage unterschiedliche Filamentgarne mit unterschiedlichen Filamenten auf. Beispielweise kann eine Lage Filamentgarne mit 50 bis 100 Filamenten, vorzugsweise mit 60 bis 80 Filamenten, aufweisen und die andere Lage weist Filamentgarne mit 100 bis 250 Filamenten, vorzugsweise mit 150 bis 200 Filamenten, auf. Selbstverständlich können die Lagen auch aus mehr als einem Filamentgarn bestehen, wobei die Mischung innerhalb der Lagen in jeder der Lagen unterschiedlich sein kann. Beispielsweise kann die erste Lage 70% eines ersten Filamengarns und 30% eines zweiten Filamentgarns aufweisen, wohingegen die zweite Lage 30% des ersten und 70% des zweiten Filamentgarns aufweist.

In einer Ausführungsform bestehen die erste Lage und/oder die zweite Lage vollständig oder zu 50 bis 70% oder zu 60 bis 90% aus den genannten Filamentgarnen. Die Verwendung von Filamentgarn hat den Vorteil, dass das Garn eine sehr glatte Oberfläche ohne abstehende Fasern aufweist und der Tragekomfort der Maske erhöht wird. Der Träger der Maske wird so beispielsweise nicht durch abstehende Fasern im Gesicht unangenehm berührt.

In einer anderen Ausführungsform weist die erste Lage eine andere Bindung auf als die zweite Lage. Beispielsweise kann die erste Lage eine Köperbindung aufweisen und die zweite Lage weist eine Atlasbindung auf. Selbstverständlich kann einer der Lagen auch eine Leinwandbindung, eine Panamabindung oder eine Mischform der genannten Bindungen aufweisen. Durch die unterschiedlichen Bindungen kann die Gewebedurchlässigkeit der Lagen beeinflusst werden. Die Gewebedurchlässigkeit der Lagen kann aber auch durch eine Kombination aus Bindungsart und Filamentgarn, Anzahl der Filamente im Garn und/oder Garnfeinheit eingestellt werden.

In einer weiteren Ausführungsform weist die erste Lage und/oder die zweite Lage als Kettgarn eine anders Garn auf als im Schuss. Vorzugsweise unterscheidet sich das Kettgarn der ersten Lage von dem Kettgarn der zweiten Lage und/oder das Schussgran der ersten Lage unterscheidet sich von dem Schussgarn der zweiten Lage. Der Unterschied der beiden Garne kann in der Garnart (beispielsweise Filamentgarn, Fasermaterial des Garns) und/oder in der Feinheit des Garns begründet sein.

In einer Ausführungsform weist die erste und/oder die zweite Lage elektrostatisches Material auf. Um den Atemwiderstand gering zu halten, muss die erste Lage und/oder die zweite Lage eine hohe Gewebedurchlässigkeit aufweisen und somit luftdurchlässig sein, andererseits soll die erste Lage und/oder die zweite Lage aber auch Partikel filtern, wenn die Maske ohne weiteres Filtermaterial getragen werden soll. Aus diesem Grund kann die erste Lage und/oder die zweite Lage mit einer elektrostatischen Ladung versehen werden. Diese elektrostatische Ladung sorgt dafür, dass Partikel, die aufgrund ihrer kleinen Größe eigentlich durch die erste und/oder zweite Lage als Filtermaterial hindurchfliegen würden, am Material der ersten und/oder zweiten Lage haftenbleiben.

In einer weiteren Ausführungsform weist die Maske einstückig mindestens eine Tasche und/oder Vertiefung und/oder eine Struktur auf. Unter dem Begriff "einstückig" soll hierbei verstanden werden, dass die Tasche, die Vertiefung und/oder die Struktur während der Herstellung der Maske mitausgebildet wird. Die Tasche, Vertiefung und/oder Struktur ist also zusammen mit der ersten und/oder zweiten Lage gewebt worden und alles zusammen ist ein Textil und nicht eine Mehrzahl von Textilen, die nach der Herstellung noch miteinander verbunden werden. Es erfolgt also kein nachrangiger Herstellungsprozess einer Tasche, nachdem die Maske hergestellt ist - beispielsweise durch Annähen eines weiteren Textils. Die Tasche der Maske soll vorzugsweise im Bereich der ersten Lage und der zweiten Lage vorgesehen sein und eine Dimension aufweisen, die der Länge und der Breite der ersten Lage und/oder der zweiten Lage weitestgehend entspricht. In einer Ausführungsform weist die Maske mehr als eine - beispielweise zwei - Vertiefungen auf. Bei der Verwendung von mehr als einer Vertiefung weist vorzugsweise jede der Lagen eine Vertiefung auf. Die Struktur der Maske soll ein Bereich der Maske sein, der auf einem kleinen Flächenbereich der Maske beispielsweise eine besonders hohe Gewebedichte aufweist (geringe Gewebedurchlässigkeit) oder eine besonders geringe Gewebedichte. Beispielsweise kann die erste Lage und/oder die zweite Lage mittig der Lagenbereite, aber oben im Bereich der Nase des zukünftigen Maskenträgers einen etwa 1 cm Breiten und etwa 5 cm langen Streifen aufweisen, der eine besondere Gewebedichte (höher oder niedriger als der übrige Bereich) besitzt. Die Struktur kann in einer Ausführungsform eine Panamabindung aufweisen. In einem nicht beschränkenden Beispiel kann die Struktur eine 4/4 Panamabindung aufweisen. Eine solche Struktur kann beispielsweise zur Aufnahme einer Anformhilfe vorgesehen sein.

In einer Ausführungsform weist die Maske einstückig mit der Maske ausgebildete Schlaufenkanäle auf. Auch hier gilt wieder die gleiche Definition für den Begriff "einstückig" wie oben. Durch die Schlaufenkanäle kann die Maske mittels Befestigungsmitteln - die durch die Schlaufenkanäle geführt werden - im Gesicht des Trägers befestigt werden. Die Schlaufenkanäle können dabei so gestaltet werden, dass eine Befestigung mittels Bänder (beispielweise zum Verknoten oder mittels eines Klicksystems) am Hinterkopf, Schlaufen zum Fixieren hinter den Ohren oder sonstige Befestigungsmitteln, darin geführt werden kann. Vorteilhafterweise kann die Maske somit an verschiedene Trageformen unkompliziert angepasst werden und bietet den Nutzer verschiedene Trageformen an.

In einer anderen Ausführungsform weist die Maske keine Schlaufenkanäle auf, sondern einen Befestigungsbereich. Die Maske ist in diesem Fall wie eine Art Rundschlauch gefertigt und weist einen Bereich mit der ersten Lage und der zweiten Lage und den Befestigungsbereich auf. Der Befestigungsbereich liegt vorzugsweise am Hinterkopf des Trägers an (und ist somit der ersten Lage und der zweiten Lage gegenüberliegend) und kann eine sehr hohe Gewebedurchlässigkeit aufweisen. In einer Ausführungsform ist der Befestigungsbereich so gestaltet, dass er elastisch ist. Hierfür kann beispielsweise ein geeignetes Fasermaterial für diesen Bereich vorgesehen werden oder die Art der Herstellung erfolgt so, dass der Befestigungsbereich elastisch ausgebildet ist (beispielweise als Jersey). In einer Ausführungsform kann der Befestigungsbereich separat zur Maske hergestellt werden und erst nach Fertigstellung der Maske mit dieser verbunden werden oder der Befestigungsbereich wird einstückig mit der ersten und/oder zweiten Lage hergestellt. In einer Ausführungsform erfolgt die Verbindung des Befestigungsbereichs mit der Maske durch weitere (angepasste) Schlaufenkanäle.

In einer Ausführungsform weist die Maske einen Filter und/oder ein Ventil auf. Filter und/oder Ventil sind separat zur Maske hergestellt und werden mit der Maske verbunden. Die Maske dient in diesem Fall als eine Art Container, der einen Filter und/oder ein Ventil aufnehmen kann. Je nach Schutzklasse, die die Maske erfüllen soll, kann der Filter und/oder das Ventil dann ausgewählt werden. Generell kann die Maske mittels des Filters in drei Arten von Schutzklassen eingestellt werden. Die drei Schutzklassen werden nicht nach der Größe der gefilterten Partikel unterschieden, sondern nach deren Anzahl. FFP1 filtert mindestens 80 Prozent der Partikel, FFP2 94 Prozent und FFP3 99 Prozent. Je mehr Partikel gefiltert werden müssen, desto mehr Lagen an Filtermaterial kommen zum Einsatz - damit werden die Masken in den höheren Schutzklassen immer dichter und haben folglich auch einen größeren Atemwiderstand. Vorteilhafterweise kann dann durch die Wahl der Gewebedurchlässigkeit der ersten und/oder zweiten Lage der Atemkomfort für den Nutzer wieder verbessert oder zumindest nicht weiter beeinflusst werden. In einer Ausführungsform weist die Maske die Tasche zur Aufnahme des Filters zwischen der ersten und der zweiten Lage auf. So ist die Position des Filters unabhängig von der Tragevariante (erste Lage oder zweite Lage zum Träger hin angeordnet) der Maske stets gleich. Mittels der Tasche kann der Filter ausgetauscht werden und die Maske so sowohl für die gleiche Schutzklasse als auch für eine höhere oder niedrigere Schutzklasse wiederverwendet werden. In einer Ausführungsform weist die Maske als Filter ein Filtermaterial der Firma Avgol Nonwovens Ltd. auf.
In der Regel wirken Ventile nur in eine Richtung (One-way Filterung), so dass in einer Ausführungsform der Erfindung die Maske zwei Vertiefungen für die Anbringung von Ventilen aufweist (einmal erste Lage, einmal zweite Lage). So ist auch die Verwendung der Maske mit Ventil für jede Tragevariante der Maske sichergestellt.

In einer Ausführungsform weist die Maske eine Anformhilfe auf, durch die die Maske an die Nase angedrückt werden kann. Insbesondere für Brillenträger wird hierdurch das Beschlagen der Brille mit Kondensat aus der Atemluft verringert oder verhindert. Als Anformhilfe kann beispielsweise ein biegsamer Draht oder ein biegsames Plastikstäbchen verwendet werden. In einer Ausführungsform wird die Anformhilfe im Bereich der Struktur der Maske in die Maske eingeführt. Vorzugsweise ist die Struktur hierfür so ausgebildet, dass die Einführung der Anformhilfe durch einfaches Durchstechen der Struktur erfolgen kann, wobei aber das Rausfallen der Anformhilfe mittels der Struktur verhindert wird. Hierfür weist die Struktur beispielsweise eine besonders gute Drapierfähigkeit auf, wodurch der Draht einfach gebogen und in der Form gehalten werden kann, wobei durch die Biegung das Herausfallen des Drahts verhindert wird.

In einer Ausführungsform ist die erste Lage optisch und/oder haptisch von der zweiten Lage unterscheidbar. Eine optische Unterscheidbarkeit kann beispielsweise dadurch erreicht werden, dass die erste Lage mit einem Garn in einer anderen Farbe hergestellt wird als die zweite Lage. Beispielsweise kann die erste Lage aus weißem Garn und die zweite Lage aus blauem Garn hergestellt werden. Haptisch werden die erste und die zweite Lage voneinander unterscheidbar, wenn beispielsweise Nähte in einer der Lagen eingebracht werden, die mittels der Finger erfühlt werden können. Auch kann eine der Lagen weitere Strukturen aufweisen, die fühlbar sind, während die andere Lage glatt ausgebildet ist. Auf diese Weise kann die erste Lage und die zweite Lage sicher voneinander unterschieden werden, so dass es nicht zu einer Fehlanwendung bezüglich der Filterleistung kommen kann. Die optische und/oder haptische Unterscheidbarkeit ermöglicht es dabei auch Personen mit einer Einschränkung einer der Sinneswahrnehmungen, Anwendungsfehler bei der Verwendung der Maske zu vermeiden. Die gleichzeitige Verwendung einer optischen und einer haptischen Unterscheidbarkeit der ersten Lage von der zweiten Lage könnte insbesondere in stressigen Situationen die Fehlerquote bei der Anwendung verringern. In einer Ausführungsform ist auch der Befestigungsbereich von der ersten Lage und/oder der zweiten Lage optisch und/oder haptisch unterscheidbar.

In einer Ausführungsform weist die erste Lage und/oder die zweite Lage einen Randbereich auf. Der Randbereich ist, wie der Name schon besagt, im Randbereich der ersten und/oder zweiten Lage angeordnet. Der Randbereich weist vorzugsweise eine Gewebedichte auf, die um etwa 20% höher ist als die Gewebedichte der restlichen Lage (in dem der Randbereich vorgesehen ist). Durch die erhöhte Gewebedichte weist die Lage eine Stabilität im Randbereich auf, wodurch die Handhabbarkeit der Maske verbessert wird. In einer Ausführungsform weist mindestens der Randbereich ein Polyestermaterial (beispielweise als doppeltes Schussgarn) auf. Bei der Herstellung der Maske kann die Maske beispielsweise mittels eines Laserschneidverfahrens ausgeschnitten werden. Durch das Polyestermaterial im Randbereich ist es dabei möglich, dass die Polyesterfäden in diesem Bereich aufschmelzen und so eine Kantenversiegelung der Maske bewirken. In vorteilhafterweise kann so das Ausfransen der ersten und/oder zweiten Lage verhindert werden. Eine solche Maske weist somit in einer Ausführungsform Schmelznähte und/oder Lasernähte auf. Die Schmelz- und/oder Lasernähte sind dabei vorzugsweise im Randbereich der ersten und/oder zweiten Lage. Es ist allerdings auch vorstellbar, dass der Randbereich der Tasche oder der Bereich des Ventils mittels einer Lasernaht oder einer Schmelznaht verfestigt wird. Weiterhin ist denkbar, dass die Struktur durch eine Schmelz- oder Lasernaht gebildet wird und/oder das die haptische Unterscheidbarkeit der ersten Lage von der zweiten Lage durch eine Schmelz- oder Lasernaht erreicht wird.

In einer Ausführungsform ist die erste Lage und/oder die zweite Lage so ausgebildet, dass die Gewebedurchlässigkeit bei Temperaturen von bis zu 60 °C konstant bleiben. Konstant meint in diesem Zusammenhang, dass die Gewebedurchlässigkeit der ersten und/oder zweiten Lage um weniger als 5% variiert. In einer Ausführungsform bleibt die Gewebedurchlässigkeit der ersten und/oder zweiten Lage bei Temperaturen von bis zu 80 °C, von über 90°C, von über 100 °C konstant. Erreicht wird das beispielsweise durch die Wahl des Fasermaterial der ersten und/oder zweiten Lage oder durch eine bestimmte Behandlung der Fasern vor oder nach der Herstellung der Maske. In einer Ausführungsform ist die erste Lage und/oder die zweite Lage zu 60%, zu 70% oder zu 100% aus Polyester oder Polyamid oder einer Mischung aus Polyester und Polyamid hergestellt.

Die Maske kann gereinigt werden indem die Maske in einer für Deutschland haushaltsüblichen Waschmaschine mit für Deutschland haushaltsüblichen Waschmitteln bei einer Temperatur von (höchstens) 95 °C gewaschen wird. Die Trocknung der Maske kann beispielsweise mittels eines für Deutschland handelsüblichen Trockners oder durch normale Raumluft erfolgen. In einer Ausführungsform variiert die Gewebedurchlässigkeit der ersten und/oder der zweiten Lage auch nach 50 Reinigungsdurchläufen (wie oben beschrieben) um nicht mehr als 5%. Die Filterleistung der Maske ist somit auch nach einer Reinigung verlässlich konstant. In einer Ausführungsform weist die erste und/oder die zweite Lage eine Einfärbung auf, wodurch die erste Lage optisch von der zweiten Lage unterscheidbar wird, wobei der Verlust der Einfärbung anzeigt, dass die Filterleistung beispielsweise durch falsche Reinigung, falsche Trocknung oder durch Verbrauch beeinträchtigt ist. In einem solchen Fall kann der Nutzer einfach erkennen, wann die Lebensdauer der Maske überschritten ist und die Maske keinen sicheren Schutz mehr gewähren kann.

Ein weiterer Gegenstand der vorliegenden Erfindung ist ein Verfahren zur Herstellung einer Maske, wobei die Maske die Eigenschaften und Merkmalen hat, wie oben beschrieben. Bei dem Verfahren werden die erste Lage und die zweite Lage gleichzeitigt gewebt, wobei die Schussfäden einer der Lagen die Schussfäden der anderen Lage an bestimmten Punkten kreuzen oder mit diesen verwoben werden. Durch diese Kreuzung oder diese Verwebung werden Nähte während des Webens gebildet und beide Lagen weisen eine vorbestimmte Gewebedurchlässigkeit auf, die nach DIN EN ISO 9237 (Bestimmung der Luftdurchlässigkeit von textilen Flächengebilden) bestimmt werden kann. Bei der Verwebung wird dabei die erste Lage so gewebte, dass die Gewebedurchlässigkeit der ersten Lage zu der Gewebedurchlässigkeit der zweiten Lage um 20 % verschieden ist.

In einer Ausführungsform des Verfahrens wird die Maske so hergestellt, dass ein Randbereich gewebt wird, der eine um mindestens 20% höhere Gewebedichte aufweist als der Restbereich der ersten und/oder der zweite Lage (indem der Randbereich vorgesehen ist). Bezüglich dieses Randbereichs gilt das Gleiche wie bereits zur Maske selber ausgeführt wurde.

Im Übrigen gilt auch für das Herstellungsverfahren der Maske die Ausführungen zu der Maske, sofern der Sachverhalt passt. Beispielsweise kann bei der Herstellung der Maske diese so gefertigt werden, dass die Maske Taschen, Strukturen oder Vertiefungen einstückig mit der ersten und/oder zweiten Lage oder der Maske aufweist. Auch die Schlaufenkanäle können bei der Herstellung der Maske einstückig mit dieser gefertigt werden.

In einer Ausführungsform wird eine Vielzahl der Masken in einem Webprozess gefertigt, wobei die Masken dann mittels eines Laserschneidinstruments vereinzelt werden. Vorzugsweise wird der Laser und der Prozess des Laserschneidens dabei so gewählt, dass eine Kantenversiegelung der Maskenränder in Form von Nähten entstehen.

Die Erfindung wird nachfolgend in Form von Figuren dargestellt.
Figur 1 zeigt schematisch eine Maske mit einer ersten und einer zweiten Lage.
Figur 2 zeigt eine Vielzahl von gewebten Masken, die noch vereinzelt werden müssen.
Figur 3 zeigt eine erste Ausführungsform einer Maske in geschnittener und gefalteter Form.
Figur 4 zeigt schematisch die erste Ausführungsform einer Maske ohne Faltung.

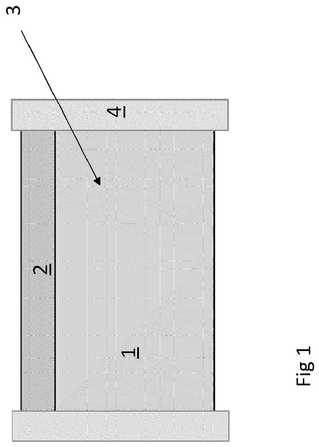

In Figur 1 ist schematisch und stark vereinfacht eine Maske 3 mit einer ersten Lage 1 und einer zweiten Lage 2 dargestellt. Nur zur besseren Darstellung wurde in dieser Figur die zweite Lage 2 größer als die erste Lage 1 gewählt. Die erste Lage 1 und die zweite Lage 2 wurden einstückig und gleichzeitig hergestellt in einer Ein-Stück-Webtechnik. Die Maske 3 weist weiterhin eine Randbereich auf, der als Schlaufenkanal 4 ausgebildet ist. Im Schlaufenkanal 4 können Befestigungsmittel geführt werden, wodurch die Maske 3 mit dem Gesicht des Trägers verbunden wird.

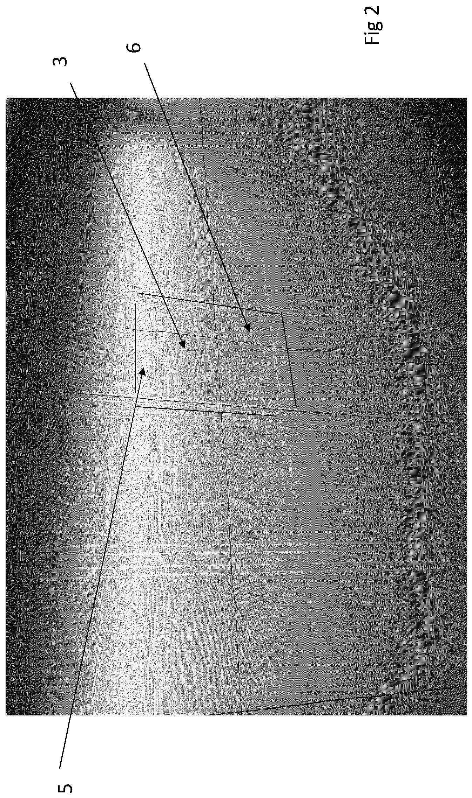

In Figur 2 ist eine Vielzahl von Masken 3 in einem Textilbogen zu sehen, die in einem weiteren Schritt vereinzelt werden. Die Vereinzelung kann beispielsweise mit einem Laserschneidinstrument erfolgen, wodurch gleichzeitig die Kanten/Ränder der Maske 3 versiegelt werden. Ein "Ausfransen" der Maske 3 in einem Randbereich 5 wird folglich verhindert. Ein weiterer Prozessschritt, bei dem die Ränder der Maske umsäumt werden, ist vorteilhafterweise nicht notwendig. Jede Maske 3 weist einen Randbereich 5 auf, der in einer anderen Art gewebt wurde als der überwiegende Teil der Maske 3. In der hier dargestellten Ausführungsform bildet der Randbereich 5 die Schlaufenkanäle (4 nach Figur 1) der Maske 3 aus. Die Masken 3 in Figur 2 weisen zudem eine Struktur 6 auf. Die Struktur 6 ist ebenfalls in einer anderen Art gewebt als der Rest der Maske (mit Ausnahme des Randbereichs 4). Mittels der Struktur 6 können die erste Lage 1 und die zweite Lage 2 durch Verwebung miteinander verbunden werden.

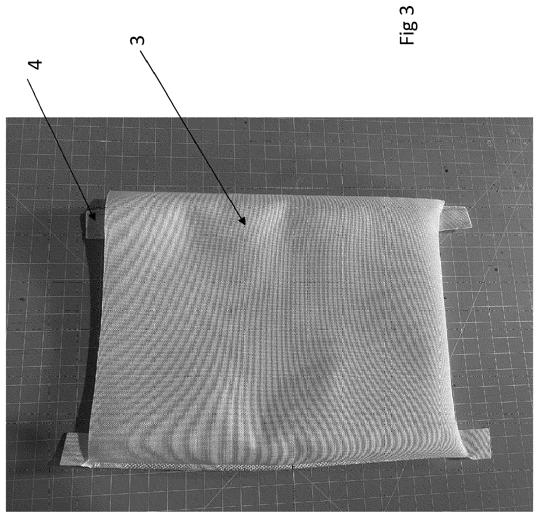

In Figur 3 ist eine Ausführungsvariante der Maske 3 dargestellt. In dieser Darstellung liegt die Maske 3 in geschnittener und gefalteter (geformter) Form vor. Der Randbereich ist als Schlaufenkanal 4 ausgebildet.

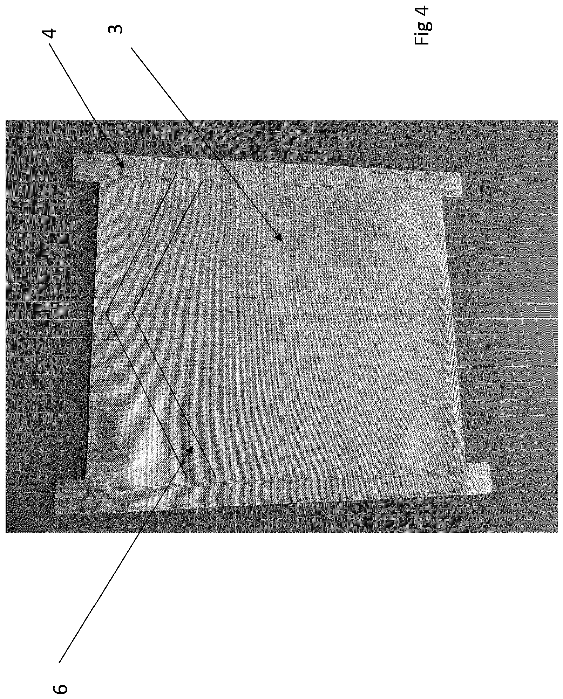

In Figur 4 ist die Maske 3 aus Figur 3 dargestellt, wobei die Maske 3 in dieser Figur noch nicht gefaltete beziehungsweise geformt vorliegt. Die Maske 3 weist im Ausführungsbeispiel eine Struktur 6 auf, die mittels der Striche eingegrenzt wurde. Mittels der Struktur 6 können die Lagen der Maske 3 miteinander verbunden werden.

## Patentansprüche

1. Maske (3) zur Bedeckung von mindestens Mund und Nase, wobei die Maske (3) mindestens eine erste und eine zweite Lage (1, 2) aufweist, wobei die erste und die zweite Lage (1, 2) bei der Herstellung der Maske (3) gleichzeitig gewebt worden sind und die Schussfäden einer der Lagen die Schussfäden der anderen Lagen an bestimmten Punkten kreuzen oder mit diesen verwoben sind, wobei durch die Kreuzung oder Verwebung Nähte während des Webens erzeugt worden sind, wobei beide Lagen jeweils eine Gewebedurchlässigkeit gemessen nach DIN EN ISO 9237 aufweisen, **dadurch gekennzeichnet, dass** die erste Lage (1) eine Gewebedurchlässigkeit aufweist, die um 20% verschieden ist von der Gewebedurchlässigkeit der zweiten Lage (2).

2. Maske (3) nach Anspruch 1, wobei die erste Lage (1) hergestellt ist aus einem Filamentgarn mit einer Garnfeinheit von 50 bis 1000 dtex und/oder die zweite Lage (2) hergestellt ist aus einem Filamentgarn mit einer Garnfeinheit von 50 bis 1000 dtex

3. Maske (3) nach einem der vorhergehenden Ansprüchen, wobei das Filamentgarn der erste Lage (1) Fasern aus Polyester und/oder Polyamid aufweist und/oder das Filamentgarn der zweiten Lage (2) Fasern aus Polyester und/oder Polyamid aufweist.

4. Maske (3) nach einem der vorhergehenden Ansprüche, wobei die erste Lage (1) eine Köperbindung aufweist und/oder die zweite Lage (2) eine Atlasbindung aufweist.

5. Maske (3) nach einem der vorhergehenden Ansprüche, wobei die erste Lage (1) als Schussgarn ein Garn mit einer Feinheit von über 800 dtex aufweist und als Kettgarn ein Garn mit einer Feinheit von unter 800 dtex und/oder die zweite Lage (2) als Schussgarn ein Garn mit einer Feinheit im Bereich von 800 dtex bis 500 dtex aufweist und als Kettgarn ein Garn mit einer Feinheit im Bereich von 50 dtex bis 250 dtex.

6. Maske (3) nach mindestens einem der vorhergehenden Ansprüche, wobei die Maske (3) einstückig mindestens eine Tasche und/oder Vertiefung und/oder Struktur (6) aufweist.

7. Maske (3) nach mindestens einem der vorhergehenden Ansprüche, wobei die Maske (3) einstückig Schlaufenkanäle (4) aufweist.

8. Maske (3) nach mindestens einem der vorhergehenden Ansprüche, wobei die Maske (3) mindestens einen Filter und/oder ein Ventil aufweist.

9. Maske (3) nach mindestens einem der vorhergehenden Ansprüche, wobei die erste Lage (1) optisch und/oder haptisch von der zweiten Lage (2) unterscheidbar ist.

10. Maske (3) nach mindestens einem der vorhergehenden Ansprüche, wobei die erste Lage (1) und/oder die zweite Lage (2) einen Randbereich (5) aufweisen, wobei der Randbereich (5) eine Gewebedicht aufweist, die um mindestens 20% höher ist als die Gewebedichte der übrigen Lage.

11. Maske (3) nach Anspruch 9, wobei die Maske zumindest im Randbereichen (5) teilweise Schmelznähte und/oder Lasernähte aufweist.

12. Maske (3) nach mindestens einem der vorhergehenden Ansprüche, wobei die Gewebedichten der ersten und/oder der zweiten Lage bei Temperaturn von bis zu 60°C konstant bleiben.

13. Maske (3) nach mindestens einem der vorhergehenden Ansprüche, wobei die Gewebedichten der ersten und/oder der zweiten Lage (1, 2) auch nach mehr als 50 Reinigungsdurchläufen bei einer Reinigungstemperaturen von höchstens 95°C nicht mehr als um 5% variiert.

14. Herstellungsverfahren für eine Maske (3) zur Bedeckung von mindestens Mund und Nase, wobei eine erste und eine zweite Lage (1, 2) bei der Herstellung der Maske (3) gleichzeitig gewebt werden, wobei die Schussfäden einer der Lagen die Schussfäden der anderen Lagen an bestimmten Punkten kreuzen oder mit diesen verwoben werden, wobei durch die Kreuzung oder Verwebung Nähte während des Webens erzeugt werden und beide Lagen mit jeweils einer Gewebedichte gemessen nach DIN EN ISO 9237 gewebt werden, **dadurch gekennzeichnet, dass** die erste Lage (1) hergestellt wird mit einer Gewebedurchlässigkeit, die um 20% verschieden ist zu der Gewebedurchlässigkeit der zweiten Lage (2).

15. Herstellungsverfahren nach Anspruch 14, wobei in mindestens einer Lage ein Randbereich (5) gewebt wird, dessen Gewebedichte mindestens um 20% höher ist als die Gewebedichte der übrigen Lage.
